# EUROPEAN PATENT SPECIFICATION

(11) **EP 2 326 214 B1**
(45) Date of publication and mention of the grant of the patent: **05.11.2014**
(21) Application number: 09778658.6
(22) Date of filing: 23.09.2009
(51) Int. Cl.: A47B 96/06, F16B 12/22, A47B 96/02

(54) **INSERTION AND FIXING SYSTEM OF A SHELF TO BE INSERTED FRONTALLY IN A MODULAR FURNITURE UNIT**
EINFÜHR- UND BEFESTIGUNGSSYSTEM FÜR EIN VON VORNE IN EINE MODULARE MÖBELEINHEIT EINZUFÜHRENDES REGAL
SYSTEME D'INSERTION ET DE FIXATION D'UN ETAGER A INSERRER PAR DEVANT DANS UNE UNITE MODULAIRE DE MEUBLES

(30) Priority: 26.09.2008 IT MI20081717
(43) Date of publication of application: 01.06.2011
(73) Proprietor: Effegi Brevetti S.r.l., 20090 Segrate MI (IT)
(72) Inventor: GIOVANNETTI, Antonio, I-20090 Segrate (Milano) (IT)
(74) Representative: Petruzziello, Aldo
(86) International application number: PCT/EP2009/006848
(87) International publication number: WO 2010/034467

(56) References cited:
- US-A- 3 996 718
- US-A- 4 178 047
- US-A- 4 332 205

## Description

The present invention relates to a system for frontally inserting a shelf between the side panels of a modular furniture unit and for fixing it to the side panels in such a way as to stiffen said furniture unit, preventing the side panels from buckling under the weight of the shelves and of the items placed on said shelves.

The systems of the prior art for inserting a shelf between the side panels of a modular furniture unit can be schematically grouped into two types: those with vertical insertion, wherein the shelf is rested with a vertical movement on pins (or on other equivalent supporting means) protruding from the side panels of the furniture unit and those with frontal insertion, wherein the pins protruding from the side panels are inserted, by means of a horizontal movement, in longitudinal grooves created, for example by milling, along the side walls of the shelf.

The pins (or the other supporting means) that carry the shelf can be fixed or adjustable in height in a per se known manner.

For aesthetic reasons, the grooves made in the side walls of a shelf (preferably) do not extend as far as the front edge of the shelf, that is the edge which is on view when the shelf is inserted between the side panels.

Since it has been observed that the side panels of a modular furniture unit tend to buckle under the weight of the shelves and of the items placed on said shelves, it is necessary (or at least advisable) to fix the shelves to the side panels in such a way as to stiffen the furniture unit to prevent one or more shelves from disengaging from the relevant supporting means and from tilting and/or falling.

A known method of obtaining this result, in the case of frontally inserted shelves, is to give the supporting means and the groove a suitable section, for example a dovetail section, the creation of which requires machine tooling operations which must be precise in order to allow an easy sliding of the shelves on the supporting means and which are therefore long and costly.

US 4 178 047 discloses a system and a method for assembling a modular furniture unit comprising a plurality of parts (side panels and shelves) joined to each other by means of supports which, according to one embodiment, are fixed in a rectangular pocket formed in each side wall of a shelf without protruding from said pocket, and by pins secured to a side panel of the furniture unit and suitable to be inserted in the supports.

The supports consist of metal U-bolts, secured to the bottom of the pocket by means of screws, the central area of which has a longitudinal seat closed at one end. Assembly of the shelf cannot be performed by means of horizontal sliding, but the shelf has to be suitably tilted to cause the pins of the side panels to match with the pockets in the side walls of the shelves.

US 2008/0067906 discloses a fastening system of a panel of a modular structure; in one embodiment thereof pins integral with the modular structure are inserted into a recess formed in a side wall of the panel, which is made to translate laterally to insert the pins into supports placed in said recess and consisting of metal U-bolts, secured to the bottom of the recess by means of screws, the central area of which has a longitudinal seat open at both ends. This system cannot be used for sliding fixing of a shelf.

US 3 996 718 discloses an insertion and fixing system for a shelf to be inserted frontally in a modular furniture unit, wherein th pins are placed in a longitudinal groove formed in each side wall of the shelf and the supports consist of metal U-bolts, secured to a side panel by means of screws, the central area of which has a longitudinal seat which is closed at one end in some supports whereas in others it is open at both ends.

Object of the present invention is to realize an insertion and fixing system of a shelf to be inserted frontally that is free from the limitations and the drawbacks presented by the fixing systems of the prior art.

In particular, an object of the invention is to provide such a system that does not require screws and/or tools for fixing the shelves.

Another object is to provide such a system that gives a greater stability in the fixing of the shelves.

These objects are achieved with an insertion and fixing system that has the characteristics set forth in independent claim 1.

Further characteristics of an insertion and fixing system realized according to the invention are described in the dependent claims.

The invention will now be better described with reference to a purely exemplifying (and therefore not limiting) embodiment thereof illustrated in the appended figures, wherein:
- Figure 1 shows a perspective, simplified view of a shelf, shown partially, bearing a fixing system realized according to the invention;
- Figure 2 shows an enlarged view of the detail highlighted in Figure 1;
- Figure 3 shows a top view of the shelf of Figure 1 coupled to a side panel, partially sectioned to show the two supports inserted in the shelf and the two pins fixed to the side panel;
- Figure 4 shows a front view of the first support belonging to the fixing system of Figure 1;
- Figure 5 shows a perspective view of the second support belonging to the fixing system of Figure 1;
- Figure 6 shows a front view of the second support of Figure 5;
- Figure 7 shows the second support of Figure 5 sectioned along the plane B-B of Figure 6.

In the appended figures like parts will be identified by the same reference numerals and letters.

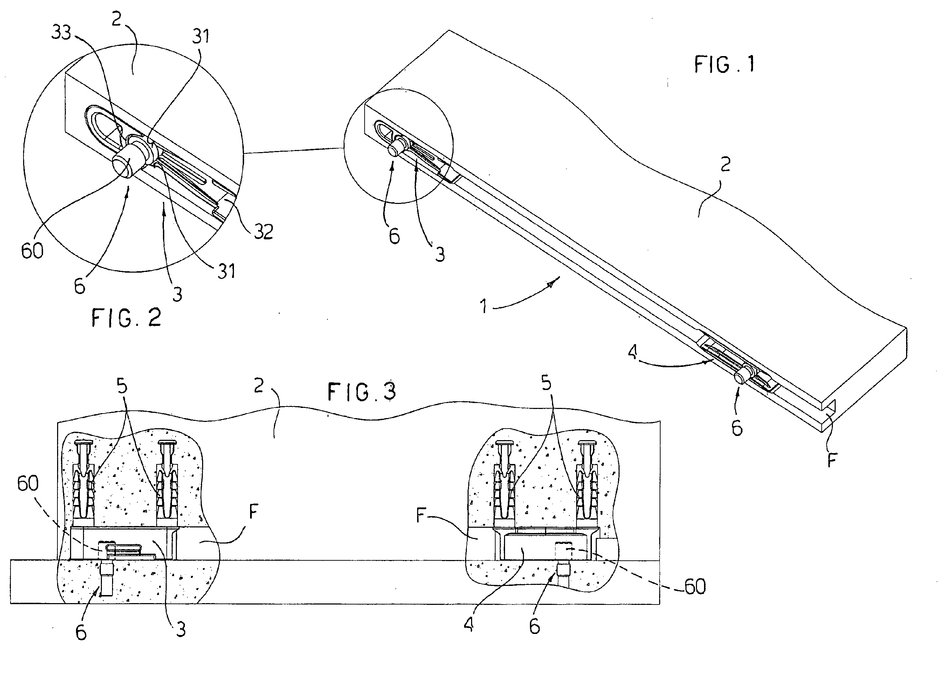

Figure 1 shows a simplified perspective view of a shelf 2, shown partially, bearing a fixing system 1 realized according to the invention, which comprises at least a first and a second support (3, 4), made of a plastic material and fixed in a longitudinal groove F with a U-shaped profile, formed in each side wall of the shelf 2 without protruding from said groove F, and at least two pins 6 integral with each side panel 10 (Figure 3) of the furniture unit and suitable to be inserted in the supports (3, 4).

The first support 3 is positioned near the end of the groove F adjacent to the front edge of the shelf 2 (that is, to the edge which is visible when said shelf is inserted between the side panels 10) and the second support 4 is positioned near the other end of the groove F.

The supports (3, 4) have a U-shaped outer profile suitable to be housed without play in said grooves F and a substantially C-shaped cross section, in which the enlarged head 60 of a corresponding pin 6 is inserted.

The supports (3, 4) therefore surround the pin at the point of greatest stress, giving the pin-support coupling a greater stability than that which can be obtained by employing the U-bolt supports used in the fixing systems of the prior art previously described.

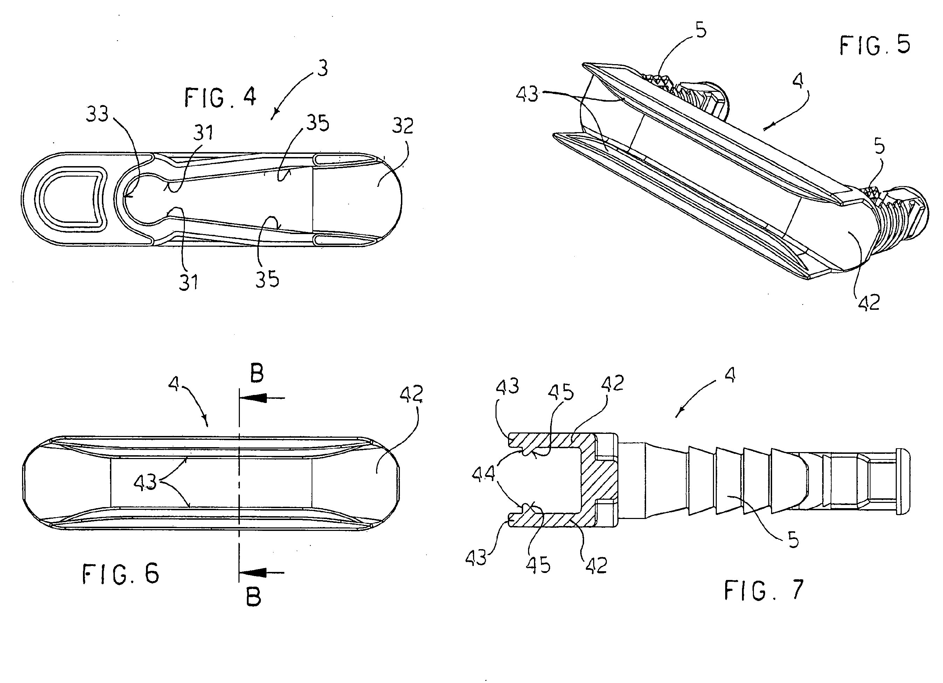

Figure 2 shows an enlarged view of the detail highlighted in Figure 1, showing the first support 3 in which one of the pins 6 is inserted: as can be seen in Figure 2 (and better in Figure 4) the first support 3 has a longitudinal seat 32 (in which the enlarged head 60 of a pin 6 is inserted) and a pair of elastic teeth 31, adjacent to the C-shaped closed end 33 of the longitudinal seat 32, suitable to block the pin 6 in a reversible manner.

Figure 3 shows a top view of the shelf 2 coupled to a side panel 10, partially sectioned to show the two supports (3, 4) inserted in the longitudinal groove F formed in one side wall of the shelf 2 and the two pins 6, fixed to the side panel 10, whose enlarged heads 60, hatched in Figure 3, are inserted in the supports 3 and 4.

From Figure 3 it can be seen that the supports (3, 4) are mounted flush with the edge of the shelf 2, that they comprise fixing shanks 5 (seen better in Figures 5 and 7) and that they are fixed in the longitudinal groove F by inserting the shanks 5 suitable to be inserted in holes made in the bottom wall of the groove F. No screws or tools are therefore needed for the assembly of the supports, thus reducing the production costs.

The shanks 5 will not be further described because they are per se known and in any case outside the scope of the present invention.

Figure 4 shows a front view of the first support 3; the longitudinal seat 32, closed at the a C-shaped end 33 having a pair of elastic teeth 31 able to block one of the pins 6 in a reversible manner, can be seen better in Figure 4.

From Figure 4 it can also be seen that the edges 35 of the longitudinal seat 32 draw gradually nearer to each other progressing from the mouth of said longitudinal seat 32 to the elastic teeth 31.

Figure 5 shows a perspective view of the second support 4 belonging to the fixing system 1, which differs from the first support 3 essentially in that its longitudinal seat 42, in which the enlarged head 60 of one of the pins 6 is inserted, is open at both ends and in that the edges 43 of the longitudinal seat 42 are parallel to each other for the entire length of said longitudinal seat.

Figure 6 shows a front view of the second support 4: in Figure 6 the longitudinal seat 42 open at both ends and the edges 43 of the longitudinal seat 42, which are parallel to each other for the whole length of said longitudinal seat, can be seen better.

Figure 7 shows the second support 4 sectioned along the plane B-B of Figure 6 to show that the edges 43 of the longitudinal seat 42 preferably have a pair of projections 44, each of which has an inclined surface 45 suitable to push the enlarged head 60 of a pin 6 inserted in the support 4 towards the inside of the longitudinal seat 42 to block the shelf 2 more firmly against the side panel 10.

Similar projections having an inclined surface, not visible in Figure 4 because they are covered by the edges 35, are preferably present in the edges 35 of the longitudinal seat 32 of the first support 3.

## Claims

1. An insertion and fixing system (1) with of a shelf (2) with two side walls to be inserted frontally in a modular furniture unit comprising at least two side panels (10), a plurality of shelves (2) and means (3, 4, 6) suitable to support the shelves (2) and to connect them to the side panels (10), said system comprising at least a first support (3) having a longitudinal seat (32) closed at an end (33) and a second support (4) having a longitudinal seat (42) open at both ends, and at least two pins (6) suitable to be inserted in the supports (3, 4), the first support (3) being positioned near the end of a groove (F) with a U-shaped profile, formed in each of the two side walls of the shelf (2) adjacent to the edge of the shelf (2) which is visible when the shelf (2) is inserted between the side panels (10) and the second support (4) being positioned near the other end of the groove (F), in that:
- the first and the second supports (3, 4) are fixed in said longitudinal groove (F) formed in each of the two side walls of the shelf (2) without protruding from said groove and mounted flush with the edge of the shelf (2) while said pins (6) are fixed to each side panel (10) of the furniture unit;
- the first and the second supports (3, 4) are made of a plastic material and comprise fixing shanks (5) suitable to be inserted in holes made in the bottom wall of the longitudinal grooves (F), without using screws or tools for the assembly of said supports (3,4);
- the first and the second supports (3, 4) have a U-shaped outer profile such as to be housed without play in said U-shaped grooves (F) formed in the side walls of the shelf (2);
the first and the second support (3, 4) have a substantially C-shaped cross-section, such as to surround the enlarged head (60) of the pins (6), the first support (3) has a C-shaped seat (32), closed at a C-shaped end (33) having, at its closed end (33), a pair of elastic teeth (31) suitable to block one of said pins (6) in a reversible manner.

2. The insertion and fixing system (1) as claimed in claim 1, **characterized in that** the edges (35) of the longitudinal seat (32) draw gradually closer to each other progressing from the mouth of said longitudinal seat (32) to the said **pair** of elastic teeth (31) of the closed end (33) which is C-shaped

3. The insertion and fixing system (1) according to any one of the preceding claims, **characterized in that** the edges (35, 43) of the longitudinal seats (32, 42) have a pair of projections (44), each of which has an inclined surface (45) suitable to push the enlarged head (60) of a pin (6) inserted in the support (3, 4) towards the inside of the relative longitudinal seat (32, 42) to block the shelf (2) against the side panel (10).

## Patentansprüche

1. Einführ- und Befestigungssystem (1) mit einem Regal (2) mit zwei Seitenwänden, das von vorne in eine modulare Möbeleinheit einzuführen ist, umfassend zumindest zwei Seitenplatten (10), mehrere Regale (2) und Mittel (3, 4, 6), die zum Stützen der Regale (2) und zum Verbinden derselben mit den Seitenplatten (10) geeignet sind, das System umfassend zumindest eine erste Stütze (3) mit einem längs verlaufenden Sitz (32), der an einem Ende (33) geschlossen ist, und eine zweite Stütze (4) mit einem längs verlaufenden Sitz (42) der an beiden Enden offen ist, und zumindest zwei Zapfen (6), die zur Einführung in die Stützen (3, 4) geeignet sind, wobei die erste Stütze (3) nahe dem Ende einer Nut (F) mit einem U-förmigen Profil angeordnet ist, die in jeder der zwei Seitenwände des Regals (2) der Kante des Regals (2) benachbart ausgebildet ist, welche sichtbar ist, wenn das Regal (2) zwischen die zwei Seitenplatten (10) eingeführt ist, und die zweite Stütze (4) nahe dem anderen Ende der Nut (F) angeordnet ist, wobei:
- die erste und die zweite Stütze (3, 4) in der längs verlaufenden Nut (F), die in jeder der zwei Seitenwände des Regals (2) ausgebildet ist, befestigt sind, ohne von der Nut vorzustehen, und bündig mit der Kante des Regals (2) angebracht sind, während die Zapfen (6) an jeder Seitenplatte (10) der Möbeleinheit befestigt sind;
- die erste und die zweite Stütze (3, 4) aus Kunststoffmaterial hergestellt sind und Befestigungsschäfte (5) umfassen, die dazu geeignet sind, in Löcher eingeführt zu sein, welche in der Bodenwand der längs verlaufenden Nut (F) hergestellt sind, ohne Schrauben oder Werkzeuge für die Montage der Stützen (3, 4) zu benutzen;
- die erste und die zweite Stütze (3, 4) ein U-förmiges Außenprofil aufweisen, sodass sie ohne Spiel in den U-förmigen Nuten (F) eingefasst sind, die in den Seitenwänden des Regals (2) ausgebildet sind;
wobei die erste und die zweite Stütze (3, 4) einen im Wesentlichen C-förmigen Querschnitt aufweisen, um den vergrößerten Kopf (60) der Zapfen (6) zu umgeben, wobei die erste Stütze (3) einen C-förmigen Sitz (32) aufweist, der an einem C-förmigen Ende (33) geschlossen ist und an seinem geschlossenen Ende (33) ein Paar elastischer Zähne (31) aufweist, die dazu geeignet sind, einen der Zapfen (6) reversierbar zu sperren.

2. Einführ- und Befestigungssystem (1) nach Anspruch 1, **dadurch gekennzeichnet, dass** sich die Kanten (35) des längs verlaufenden Sitzes (32) fortschreitend von der Mündung des längs verlaufenden Sitzes (32) zum dem Paar elastischer Zähne (31) des geschlossenen Endes (33), das C-förmig ist, einander allmählich annähern.

3. Einführ- und Befestigungssystem (1) nach einem der vorhergehenden Ansprüche, **dadurch gekennzeichnet, dass** die Kanten (35, 43) der längs verlaufenden Sitze (32, 42) ein Paar Vorsprünge (44) aufweisen, der jeder eine geneigte Fläche (45) aufweist, welche zum Schieben des vergrößerten Kopfs (60) eines Zapfens (6), der in die Stütze (3, 4) eingeführt ist, zur Innenseite des jeweiligen längs verlaufenden Sitzes (32, 42) hin geeignet ist, um das Regal (2) an der Seitenplatte (10) zu sperren.

## Revendications

1. Système d'insertion et de fixation (1) avec une étagère (2) avec deux parois latérales à insérer de manière frontale dans une unité de meuble modulaire, comprenant au moins deux panneaux latéraux (10), une pluralité d'étagères (2) et des moyens (3, 4, 6) appropriés pour supporter les étagères (2) et pour les relier aux panneaux latéraux (10), ledit système comprenant au moins un premier support (3) possédant un siège longitudinal (32) fermé à une extrémité (33) et un deuxième support (4) possédant un siège longitudinal (42) ouvert aux deux extrémités, et au moins deux broches (6) appropriées pour être insérées dans les supports (3, 4), le premier support (3) étant positionné à proximité de l'extrémité d'une rainure (F) avec un profil en forme de U, formée dans chacune des deux parois latérales de l'étagère (2), à côté du bord de l'étagère (2) qui est visible lorsque l'étagère (2) est insérée entre les deux panneaux latéraux (10), et le deuxième support (4) étant positionné à proximité de l'autre extrémité de la rainure (F), dans lequel :
- les premier et deuxième supports (3, 4) sont fixés dans ladite rainure longitudinal (F) formée dans chacune des deux parois latérales de l'étagère (2), sans faire saillie à partir de ladite rainure, et montés en affleurement avec le bord de l'étagère (2), tandis que lesdites broches (6) sont fixées à chacun des panneaux latéraux (10) de l'unité de meuble ;
- les premier et deuxième supports (3, 4) sont constitués d'une matière plastique et comprennent des tiges de fixation (5) appropriées pour être insérées dans des trous réalisés dans le fond des rainures longitudinales (F), sans utiliser de vis ni d'outils pour l'assemblage desdits supports (3, 4) ;
- les premier et deuxième supports (3, 4) présentent un profil extérieur en forme de U, de manière à pouvoir être logés sans jeu dans lesdites rainures en forme de U (F) formées dans les parois latérales de l'étagère (2) ;
- les premier et deuxième supports (3, 4) possèdent une section transversale quasiment en forme de C, de manière à entourer la tête élargie (60) des broches (6), le premier support (3) possède un siège en forme de C (32) fermé à une extrémité en forme de C (33), lequel possède, à son extrémité fermée (33), une paire de dents élastiques (31) appropriées pour bloquer l'une desdites broches (6) de façon réversible.

2. Système d'insertion et de fixation (1) selon la revendication 1, **caractérisé en ce que** les bords (35) du siège longitudinal (32) se rapprochent progressivement l'un de l'autre à partir de la bouche dudit siège longitudinal (32) vers ladite paire de dents élastiques (31) de l'extrémité fermée (33) présentant une forme en C.

3. Système d'insertion et de fixation (1) selon l'une quelconque des revendications précédentes, **caractérisé en ce que** les bords (35, 43) des sièges longitudinaux (32, 42) possèdent une paire de projections (44), dont chacune comporte une surface inclinée (45) appropriée pour pousser la tête élargie (60) d'une broche (6) insérée dans le support (3, 4) vers l'intérieur du siège longitudinal (32, 42) correspondant pour bloquer l'étagère (2) contre le panneau latéral (10).
